# EUROPEAN PATENT APPLICATION

(11) **EP 1 722 432 A1**
(43) Date of publication of application: **15.11.2006**
(21) Application number: 05709424.5
(22) Date of filing: 28.01.2005
(51) Int. Cl.: H01M 8/04, H01M 8/06, H01M 8/10

(54) **FUEL CONTAINER FOR STORING FUEL LIQUID FOR FUEL CELL, AND FUEL CELL PACK**

(30) Priority: 04.02.2004 JP 2004027656
(71) Applicant: MATSUSHITA ELECTRIC INDUSTRIAL CO., LTD., Kadoma-shi, Osaka Osaka 571-0051 (JP)
(72) Inventor: NIIKURA, JunjiC/o Matsushita Elec. Ind. Co., L, Chuo-ku, Osaka-shi, Osaka 540-6319 (JP); YUASA, Kohji, C/o Matsushita Elec. Ind. Co., Ltd., Chuo-ku, Osaka-shi, Osaka 540-6319 (JP); OKADA, Yukihiro, c/o Matsushita Elec. Ind. Co., Lt, Osaka-shi, Osaka 540-6310 (JP); SHIBUTANI, Satoshi, c/o Matsushita Elec. Ind. Co.,, Chuo-ku, Osaka-shi, Osaka 540-6319 (JP); UEDA, Hideyuki, c/o Matsushita Ele. Ind. Co., Ltd., Chuo-ku, Osaka-shi, Osaka 540-6319 (JP); AKIYAMA, Takashi, C/o Matsushita Elec. Ind. Co., L, Chuo-ku, Osaka-shi, Osaka 540-6319 (JP)
(74) Representative: Price, Paul Anthony King
(86) International application number: PCT/JP2005/001181
(87) International publication number: WO 2005/076399

(57) **Abstract**

A fuel container for storing a fuel liquid for a fuel cell has a double wall structure including an inner container for storing a fuel liquid and an outer container for housing the inner container, and a material capable of retaining the fuel between the inner container and the outer container. A fuel cell pack includes a fuel cell and a fuel container for storing a fuel liquid for the fuel cell. The fuel cell pack includes a double wall exterior casing having an inner casing for housing the fuel cell and the fuel container and an outer casing for housing the inner casing, and a material capable of retaining the fuel between the inner casing and the outer casing.

## Description

### Technical Field

The present invention relates to a fuel container for storing a fuel liquid for a fuel cell, and relates to a fuel cell pack comprising a fuel cell using a fuel liquid.

### Background Art

Fuel cells are classified into the following types according to the type of electrolyte they use: phosphoric acid fuel cells, alkaline fuel cells, molten carbonate fuel cells, solid oxide fuel cells, and solid polymer fuel cells. Among them, solid polymer fuel cells, which have the advantages of low temperature operation and high output density, have been put into practical use including vehicle power sources and cogeneration systems for household use.

As more functionality is added to portable devices such as notebook computers, cell phones and PDAs in recent years, they tend to consume more power. In currently available power sources for portable devices such as lithium secondary batteries and nickel-metal hydride secondary batteries, however, it is difficult to improve their energy density to catch up with this trend of increasing consumption power. Accordingly, concerns are growing that the capacities of such power sources may soon be insufficient.

Under the circumstances, attention has been given to solid polymer fuel cells as a power source for portable devices. Particularly, direct-oxidation fuel cells, which can produce electric energy by directly oxidizing a fuel liquid on an electrode at a room temperature without reforming the fuel liquid into hydrogen, are drawing the most attention because they do not require reformers, and thus the use thereof can give smaller power sources.

As the fuel for direct-oxidation fuel cells, low-molecular-weight alcohols and ethers are being studied. Among them, methanol is regarded as the most promising candidate because it can offer high energy efficiency and high output. Fuel cells that employ methanol as the fuel are called direct methanol fuel cells (hereinafter simply referred to as DMFC).

The reactions that occur at the anode and cathode in a DMFC are represented by the following reaction formulas (1) and (2).

CH₃OH+H₂O → CO₂+6H⁺+6e⁻ (1)

3/2O₂+6H⁺+6e⁻ → 3H₂O (2)

As can be seen from the reaction formula (1), the reaction at the anode requires methanol as a fuel, and water. Likewise, as can be seen from the reaction formula (2), water is produced at the cathode. The water produced at the cathode can be collected and reused at the anode. From the viewpoint of simplifying a fuel cell system, however, the fuel container desirably stores a fuel as well as water. Although the fuel container may be divided into two sections, and a fuel and water may be stored separately in the two sections, usually, an aqueous solution containing a fuel is stored.

There are different types of fuel containers proposed: cartridge type as disclosed by Patent Document 1; and injection type as disclosed by Patent Document 2. The cartridge type fuel container is detachable from the body of a fuel cell, and therefore the entire container may be replaced with a new one. The injection type fuel container is fixed inside a fuel cell system, and a fuel is injected from the outside as needed.

Inside the above-mentioned conventional fuel containers, pressure changes due to various factors. When the fuel is sucked from the fuel container by a pump or the like, for example, the pressure in the container tends to decrease as the amount of fuel in the container decreases. Conversely, when the fuel container is exposed to a high temperature environment of up to about 80°C such as inside of vehicle on hot summer days, a fuel having a low boiling point evaporates, increasing the pressure inside the container.

In view of the above, a technique has been investigated for preventing a fuel from leaking from the interface between the fuel container and the fuel cell due to a pressure change in the fuel container. Patent Document 3, for example, proposes a technique for maintaining the pressure inside the fuel container lower than atmospheric pressure.
Patent Document 1: Japanese Laid-Open Patent Publication No. 2003-92128
Patent Document 2 Japanese Laid-Open Patent Publication No. 2001-93551
Patent Document 3 Japanese Laid-Open Patent Publication No. 2003-217618

### Disclosure of the Invention

### Problem That the Invention is To Solve

The leakage prevention technique mentioned above is effective in dealing with fuel leakage due to a pressure change in a fuel container. However, it cannot prevent a fuel from flowing outside the fuel container in possible emergency situations such as: when the fuel container has a defect or damaged component; when the fuel cell is mechanically damaged as a result of the application of impact or stress exceeding the designed limit in the event of a drop or crush; when the container is discarded with residual fuel left therein; and when the fuel container corrodes or degrades during long-term storage.

Moreover, in fuel cell packs comprising a fuel cell and a fuel container, fuel leakage can occur not only from the fuel container, but also from the power generation unit of the fuel cell, from the pipe connecting the fuel cell and the fuel container, and from the joint of the pipes. For this reason, it is desirable to prevent a fuel not only from flowing outside a fuel container, but also from flowing outside a fuel cell pack.

### Means for Solving the Problem

In view of the above, the present invention relates to a fuel container for storing a fuel liquid for a fuel cell, the fuel container comprising: a double wall structure comprising an inner container for storing a fuel liquid and an outer container for housing the inner container; and an absorbent material between the inner container and the outer container, the absorbent material being capable of retaining the fuel liquid.
As used herein, the "fuel liquid" includes an aqueous solution containing a fuel (a mixture of a fuel and water), a non-aqueous solution containing a fuel (a mixture of a fuel and a non-aqueous solvent), and a liquid composed simply of a fuel, etc.

When the fuel liquid is an aqueous solution containing a fuel, the absorbent material may be a material capable of absorbing at least one of the fuel and water. When the fuel liquid is a non-aqueous solution containing a fuel, the absorbent material may be a material capable of absorbing at least one of the fuel and a non-aqueous solvent. When the fuel liquid is composed simply of a fuel, the absorbent material may be a material capable of absorbing the fuel.

In the fuel container comprising the absorbent material disposed between the inner and outer containers, even if an emergency occurs and the fuel liquid leaks from the inner container, the absorbent material absorbs the fuel liquid. This effectively prevents the fuel liquid from leaking outside the fuel container. Furthermore, even if the inner container and the outer container are damaged at the same time, the fuel liquid leaked from the inner container is first absorbed by the absorbent material disposed between the inner and outer containers. Accordingly, it is possible to prevent or significantly delay the fuel liquid from leaking outside the fuel container.

The fuel container according to the present invention includes at least two types. One type is injection type fuel container which is mounted inside a fuel cell pack comprising a fuel cell. In this case, the fuel container is refilled by injecting a fuel liquid from the outside using an injection device such as syringe when the container is empty or approaching a low level of fuel remaining in the container. The other type is cartridge type fuel container. The cartridge type fuel container is detachable from a fuel cell pack comprising a fuel cell, and therefore the entire container is replaced with a new one when the fuel container is empty or approaching a low level of fuel remaining in the container.

The cartridge type fuel container is highly versatile for many applications, but it requires high reliability in preventing leakage of the fuel liquid. The fuel container of the present invention is expected to prevent fuel leakage in various emergency situations, and is particularly suitable for use as a cartridge type fuel container which is detachable from a fuel cell pack comprising a fuel cell.

As for fuel cell packs comprising a fuel cell and a fuel container, it is desired that they be designed to prevent fuel leakage not only from the fuel container but also from all the components contained in the fuel cell pack.

In view of the above, the present invention further relates to a fuel cell pack comprising a fuel cell and a fuel container for storing a fuel liquid for the fuel cell, the fuel cell pack comprising: a double wall exterior casing comprising an inner casing for housing the fuel cell and the fuel container and an outer casing for housing the inner casing; and an absorbent material between the inner casing and the outer casing, the absorbent material being capable of retaining the fuel liquid.

The fuel cell pack may further comprise a tank for storing waste liquid from the fuel cell, a tank for storing water or a non-aqueous solvent for use in adjusting the fuel concentration, etc. In this case, the absorbent material capable of retaining the fuel liquid is preferably a material capable of retaining both the waste liquid and the water or non-aqueous solvent. When the fuel cell pack has a tank for storing the water or non-aqueous solvent, the absorbent material capable of retaining the fuel liquid is preferably a material capable of retaining at least the water or non-aqueous solvent because the fuel liquid is either an aqueous solution or non-aqueous solution. The waste liquid contains the same ingredient as the fuel liquid, and therefore it can be regarded as the fuel liquid.

In the fuel cell pack comprising the absorbent material disposed between the inner casing and the outer casing, if an emergency occurs and the fuel liquid leaks from a component in the fuel cell pack, and the fuel liquid enters between the inner and outer casings, the absorbent material absorbs the fuel liquid. Accordingly, the leakage of the fuel liquid outside the fuel cell pack can be prevented. Similarly, if the outer casing is damaged, the leaked fuel liquid is first absorbed by the absorbent material disposed between the inner and outer casings. Accordingly, the leakage of the fuel liquid outside the fuel cell pack can be prevented or delayed.

In the fuel container of the present invention, the absorbent material capable of retaining the fuel liquid preferably comprises a material capable of gelling or coagulating upon absorption of the fuel liquid. Because the absorbent material becomes highly viscous when it coagulates or gels, so that the rate at which the fuel liquid diffuses between the inner and outer containers slows down significantly. As a result, the flow of the fuel liquid from the inner container slows down significantly or stops eventually. Even if both the inner and outer containers are damaged at the same time, the occurrence of fuel liquid leakage outside the fuel container can be reduced.

Accordingly, leakage of the fuel liquid can be stopped before all the fuel liquid stored in the fuel container is completely removed. At the same time, because the depletion or rapid decrease of the fuel liquid contained in the fuel container is prevented, it is possible to prevent the fuel cell from malfunctioning as well as the electronic device equipped with the fuel cell as its power source from breaking down.

In the fuel cell pack of the present invention also, the material capable of retaining the fuel liquid preferably comprises a material capable of gelling or coagulating upon absorption of the fuel liquid. When the absorbent material disposed between the inner casing and the outer casing coagulates or gels, the rate at which the fuel liquid diffuses between the inner and outer casings slows down significantly, and therefore the occurrence of fuel liquid leakage outside the fuel cell pack can be reduced significantly.

In direct-oxidation fuel cells, an aqueous solution containing a fuel is often stored in the fuel container. When the fuel liquid is an aqueous solution containing a fuel, the absorbent material preferably comprises a substance capable of forming a hydrogen bond, rapidly increasing the viscosity of the water and forming hydrogel. Examples of such absorbent material include agar, carageenan, xanthan gum, gellan gum, guar gum, polyvinyl alcohol, polyacrylic acid salt, water-soluble cellulose and polyalkylene oxide. They may be used singly or in any combination.

When a non-aqueous solution containing a fuel or a liquid composed simply of a fuel is stored in the fuel container, the absorbent material capable of retaining the fuel liquid is not specifically limited, but hydroxypropyl methyl cellulose, a protein or the like is preferably used. When a protein is in contact with a lower alcohol which is usually used as a fuel, for example, the molecular structure of the protein changes and the protein coagulates. Coagulated material can significantly reduce the diffusion rate of liquid, as compared to gelled material, so that coagulated material is highly effective in preventing the fuel liquid from leaking to the outside. A typical example of the protein is gelatin.

In the event where the inner container is damaged or fuel leakage occurs in the fuel cell pack, it is preferred that the user immediately recognize the abnormal condition and take an action such as replacing the fuel container with a new one. Accordingly, a sensor for detecting presence of the fuel liquid is preferably disposed between the inner container and the outer container of the fuel container. In the fuel cell pack, the sensor for detecting presence of the fuel liquid is preferably disposed between the inner casing and the outer casing.

The sensor for detecting presence of the fuel liquid is not specifically limited. For example, a sensor that detects a change in refractive index, a sensor that measures sound velocity, a sensor that detects a shift in the center of gravity of the fuel container or fuel cell pack, or a substance that changes color when it is in contact with the fuel liquid can be used. Among them, preferred is a substance that changes color when it is in contact with the fuel liquid because it is easily recognized by the user, and it is inexpensive and easily available in small sizes.

A preferred example of the substance that changes color upon contact with the fuel liquid is a dried gel carrying a humidity indicator. The humidity indicator is a substance that changes color as it absorbs humidity. Cobalt chloride or the like is used. The humidity indicator may be impregnated into a material similar to a dried gel such as alumina, silica alumina or zeolite. Water detection seals for use in cell phones, which have rapidly spread in recent years, can also be used.

As the dried gel, for example, silica gel, silica alumina gel, etc, can be used. They may be used singly or in any combination. Dried gel itself possesses an ability to absorb liquid, and thus it has both functions of retaining the fuel liquid and sensing the presence of the fuel liquid. As such, the use of the dried gel carrying the humidity indicator as the absorbent material reduces the space inside the fuel container and fuel cell pack and simplifies the production process. A water detection seal functions only in the area where it is placed, but the use of the dried gel between the inner and outer containers or between the inner and outer casings allows easy detection of a very small amount of leakage in such cases as when very slight fracture occurs in the inner container.

Fuel cells are often used as power sources for electronic devices. For this reason, it is advantageous that the sensor for detecting the presence of the fuel liquid send information about fuel leakage in the fuel container or fuel cell pack in the form of an electric signal to the electronic device, so as to inform the user via the electronic device of the information. According to this method, the user can immediately recognize abnormal conditions of the fuel container or fuel cell pack.

Among sensors for detecting abnormal conditions in the form of an electric signal, preferred is a sensor that detects a change in electric conductivity because it is relatively inexpensive and highly sensitive, and can be made small. The sensor for detecting a change in electric conductivity comprises, for example, a pair of electrodes and a measuring unit for measuring a change in electric conductivity between the electrodes. For example, a very small high-frequency current is applied between the pair of electrodes disposed in the space between the inner and outer containers, during which an impedance is measured. In this case, if the impedance is lower than a specified value, it implies that there is an increase in electric conductivity due to fuel leakage. The information about abnormal conditions can be notified to the user via a display of the electric device or the like.

When the fuel liquid has very low electric conductivity, a salt such as sodium chloride can be added to the fuel liquid or absorbent material, or can be dispersed between the inner and outer containers or between the inner and outer casings.
In order to detect a very small change in electric conductivity at a high sensitivity, it is desired that electrodes having a large area are disposed with a small interelectrode distance. As a result of recent advances in photolithography, comb-shaped electrodes with an interelectrode distance of about 1 µm are commercially available.

In the fuel cell pack of the present invention, the inner casing is preferably made of a material permeable to the fuel liquid. More specifically, pores having an appropriate size are formed in the constituent material of the inner casing, or a porous material is used. However, when the absorbent material disposed between the inner and outer casings is in the form of a powder, the size of the pores needs to be designed such that the absorbent material does not enter the inside of the inner casing.

The constituent material of the inner casing is not specifically limited, and a thin-film material or the like can be used. From the viewpoint of maintaining the mechanical strength of the fuel cell pack, preferably used is a material having a certain thickness and high mechanical strength.

When the fuel liquid can permeate through the inner casing, even if any of the components in the fuel cell pack including the fuel cell, the fuel container, and an interface (connecting pipe) between the fuel container and the fuel cell is damaged and fuel liquid leakage occurs, the fuel liquid will pass through the inner casing into the space between the inner and outer casings, where the fuel liquid is absorbed by the absorbent material. Accordingly, it is possible to prevent the fuel liquid leaked from the fuel container from staying or accumulating inside the inner casing. This prevents the fuel liquid from coming into contact with the electronic circuit or auxiliary equipment, such as a pump for controlling the operation of the fuel cell, in the inner casing. As a result, a breakdown caused by short-circuiting of the electronic circuit can be prevented.

### Effect of the Invention

According to the present invention, even if an emergency occurs and the fuel liquid leaks from the fuel container, the fuel cell, the pipe connecting the fuel cell and the fuel container or the like, it is possible to prevent the fuel liquid from leaking outside the fuel container or the fuel cell pack. Along with the use of a specified sensor, information about abnormal conditions (e.g., fuel leakage) can be notified to the user of the fuel container, fuel cell or electronic device, and thus continued use of the fuel container or fuel cell pack in an abnormal condition can be avoided. Consequently, fuel cells can be used more safely.

### Brief Description of the Drawings

FIG. 1 is a schematic vertical cross sectional view of a fuel container according to a first embodiment of the present invention.
FIG. 2 is a schematic vertical cross sectional view of a fuel container according to a second embodiment of the present invention.
FIG. 3 is a schematic vertical cross sectional view of a fuel cell pack according to a third embodiment of the present invention.
FIG. 4 is a schematic vertical cross sectional view of a fuel cell pack according to a fourth embodiment of the present invention.

### Best Mode for Carrying Out the Invention

### First Embodiment

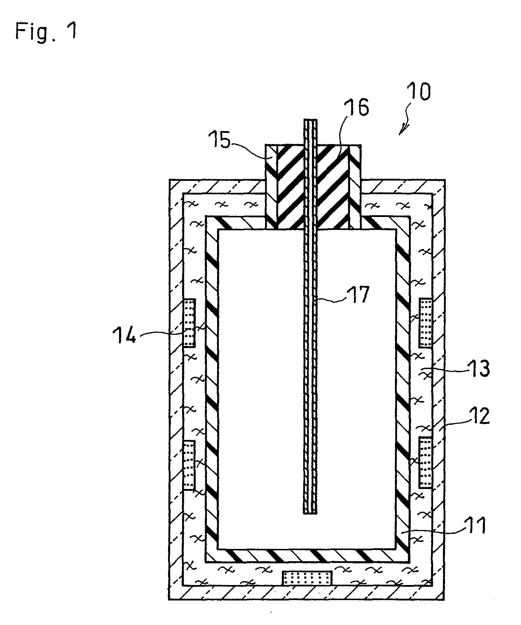

FIG. 1 is a schematic vertical cross sectional view of a fuel container 10 of the present invention for storing a fuel liquid for a fuel cell. The fuel container 10 shows an example case in which the fuel container 10 is cartridge type which is detachable from a fuel cell pack containing a fuel cell. However, when the fuel container 10 is injection type which is mounted in a fuel cell pack and into which a fuel liquid is injected by a syringe or the like, the structure is similar.

The fuel container 10 has a double wall structure, and comprises a rectangular inner container 11 for storing a fuel liquid (not shown) and a rectangular outer container 12 for housing the inner container 11. The space between the inner container 11 and the outer container 12 is filled with an absorbent material 13 capable of retaining the fuel liquid. On the inner walls of the outer container 12 are disposed sensors 14 for detecting the presence of the fuel liquid between the inner container 11 and the outer container 12. The inner container 11 and the outer container 12 have equal sized apertures formed on the top thereof. A cylindrical member 15 is fit into the apertures. The hollow of the cylindrical member 15 is filled with a packing 16 made of an elastic material. A hollow needle 17 is inserted into the center of the packing 16, through which the fuel liquid is fed to the fuel cell.

Although, in FIG. 1, the hollow needle 17 is shown as a fuel transfer means, the fuel transfer structure is not limited thereto. For the fuel container of the present invention, any transfer means proposed for use in conventional fuel containers can be used, without any particular limitation.

In the fuel container 10, because the inner container 11 directly contacts fuel such as methanol, the constituent material of the inner container 11 should be unreactive with the fuel and resistant to erosion by fuel. The inner container 11 should also be resistant to changes in internal pressure. From the viewpoint of satisfying the above conditions, the inner container 11 is preferably made of a fluorocarbon resin such as polytetrafluoroethylene (PTFE), tetrafluoroethylene-perfluoropropyl vinyl ether copolymer (PFA), tetrafluoroethylene-hexafluoropropylene copolymer (FEP), tetrafluoroethylene-ethylene copolymer (ETFE) or polyvinylidene fluoride (PVDF); an engineering plastic such as polyether ether ketone (PEEK) or polyphenylene sulfide (PPS); or a silicone resin. They may be used singly, or they may be used or blended in any combination.

Preferably, the outer container 12 is resistant to outside pressure and impact forces and has sufficient mechanical strength to protect the inner container 11. When a substance capable of changing color upon contact with the fuel liquid is disposed between the inner container 11 and the outer container 12 as a sensor, the entire outer container 12 or part thereof should be made of a transparent or translucent material so that the color change of the sensor can be seen from the outside. When the most part of the outer container 12 is made of an opaque material, for example, an opening made of a transparent material is formed in the outer container 12, and the sensor is disposed in a position where it can be seen through the opening.

In FIG. 1, as the absorbent material 13 capable of retaining the fuel liquid, a fibrous material is used such as woven fabric, nonwoven fabric, foam or felt. Fibrous materials are highly versatile for many applications because they can absorb and retain fuel liquid regardless of the type of fuel liquid used. The fibrous material can be made of, for example, cotton, vinylon (acetalized polyvinyl alcohol), polyester, polyurethane or nylon (polyamide), but it is not limited thereto.

If the diffusion rate of fuel liquid is high in the absorbent material 13, the leakage of the fuel liquid from the inner container 11 is accelerated in the event where the inner container 11 is damaged. For this reason, the diffusion rate of fuel liquid in the absorbent material 13 is preferably low. At the same time, the absorbent material 13 preferably has high capability of retaining the fuel liquid after absorbing it. Examples of the absorbent material that satisfies the above conditions include polyurethane and a nylon sponge.

As the sensors 14, a substance capable of changing color upon contact with the fuel liquid is preferably used such as water detection seals for use in portable electronic devices (e.g., cell phones). A water detection seal typically comprises a porous film and an aqueous ink applied onto the back surface of the porous film. Upon contact with water, the ink dissolves in water and diffuses into the porous film by capillary action, and then appears on the front surface of the porous film, where the color of the ink is observed. Aqueous ink often dissolves in low-molecular-weight alcohol such as methanol. Accordingly, even if the fuel liquid does not contain water, when the fuel comprises a low-molecular-weight alcohol, a conventional water detection seal is preferably used as the sensor. Alternatively, a sensor can be produced by preparing, according to the type of the fuel liquid used, an ink capable of dissolving into the fuel liquid, and applying the ink onto the back surface of a porous film.

The sensor(s) 14 capable of changing color upon contact with the fuel liquid can be disposed anywhere between the inner container 11 and the outer container 12. The sensor(s) 14 may be disposed at a single point or multiple points. In FIG. 1, a plurality of sensors 14 are disposed on the inner walls of the outer container 12, but they may be disposed on the outer walls of the inner container 11, for example. In order to inform the user of abnormal condition immediately after fuel leakage occurs due to trouble such as breakage of the inner container 11, preferably, the substance capable of changing color upon contact with the fuel liquid is disposed on the outer wall(s) of the inner container 11.

### Second Embodiment

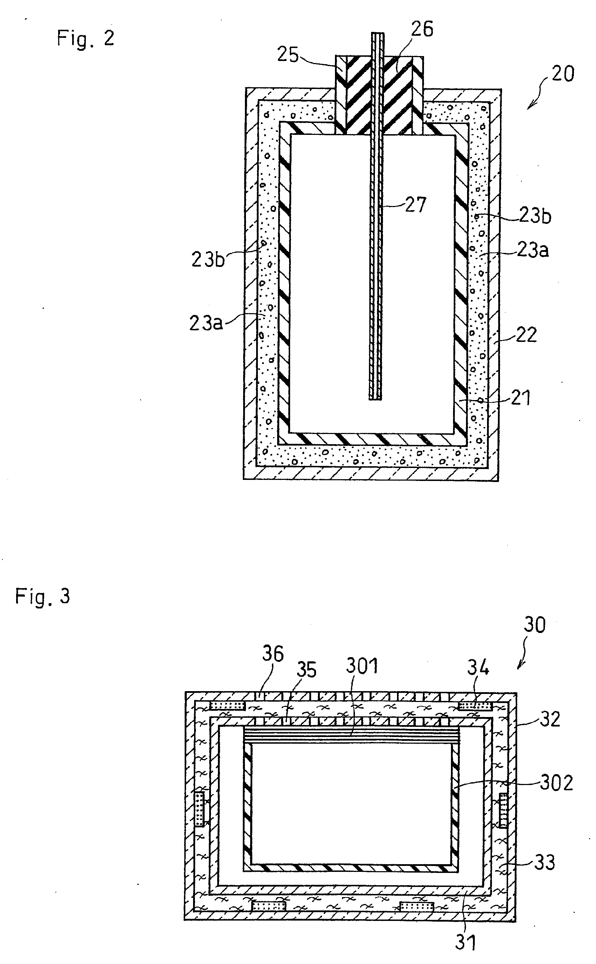

FIG. 2 is a schematic vertical cross sectional view of a fuel container 20 of the present invention for storing a fuel liquid for a fuel cell. The fuel container 20 has the same structure as the fuel container according to the first embodiment, except for the structure of the sensor for detecting the presence of the fuel liquid between the inner container and the outer container and for the structure of the absorbent material. In FIG. 2, the space between the inner container 21 and the outer container 22 is filled with a mixture of a powdery absorbent material 23a capable of retaining the fuel liquid and a powdery or granular substance 23b capable of changing color upon contact with the fuel liquid and serving as a sensor. The absorbent material 23a and the substance 23b capable of changing color upon contact with the fuel liquid are uniformly dispersed.

The fuel container 20 has a double wall structure, and comprises a rectangular inner container 21 for storing a fuel liquid (not shown) and a rectangular outer container 22 for housing the inner container 21. The inner container 21 and the outer container 22 have equal sized apertures formed on the top thereof. A cylindrical member 25 is fit into the apertures. The hollow of the cylindrical member 25 is filled with a packing 26 made of an elastic material. A hollow needle 27 is inserted into the center of the packing 26, through which the fuel liquid is fed to the fuel cell.

In the following, an embodiment in which the absorbent material 23a is a material capable of gelling or coagulating upon absorption of the fuel liquid is described.
The fuel container according to the first embodiment has the function of absorbing and retaining the fuel liquid because it contains, as the absorbent material 13, a fibrous material, sponge, dried gel, etc, but it does not prevent the fuel liquid from flowing from the inner container 11. In other words, there is a possibility that the fuel liquid may continuously flows from the inner container 11 until the absorbent material 13 is completely saturated with the fuel liquid it has absorbed.
With the use of a material capable of gelling or coagulating upon absorption of the fuel liquid as the absorbent material 23a, however, the flowability of the fuel liquid is reduced significantly in the absorbent material having the fuel liquid absorbed therein, preventing the leakage of the fuel liquid.

When the fuel liquid contains water, as the material capable of gelling upon absorption of the fuel liquid, preferred is a material capable of swelling with water and forming hydrogel. Because hydrogel has a three-dimensional crosslinking structure formed with hydrogen bonding, it can inhibit the movement of the fuel liquid significantly. The material capable of forming hydrogel is preferred also because it has a relatively high gelation rate, and the resulting gel has a high viscosity.

Examples of the material capable of forming hydrogel include agar, carageenan, xanthan gum, gellan gum, guar gum, polyvinyl alcohol, polyacrylic acid salt, water-soluble cellulose such as carboxymethyl cellulose and hydroxypropyl methyl cellulose, and polyethylene oxide. They may be used singly or in any combination.

Most materials capable of forming hydrogel are highly hydrophilic, so that when the fuel liquid is a non-aqueous solution containing a fuel or a liquid composed simply of a fuel, they do not form a gel. Hydroxypropyl methyl cellulose, however, has a methoxy group and a hydroxypropyl group which have high affinity for oils, and therefore it swells with a non-aqueous solution or a liquid composed simply of a fuel and forms a gel. The use of hydroxypropyl methyl cellulose is also effective in gelling an aqueous solution containing a low-molecular-weight alcohol (e.g., methanol) as fuel at a high concentration.

When the fuel comprises an oil having a relatively high molecular weight, the material capable of coagulating or gelling is preferably a fatty acid. Alternatively, an agent for used cooking oil disposal that solidifies oil for home use, which has become commercially available in recent years, can be used.

Materials capable of coagulating or gelling upon contact with the fuel liquid are often in the form of a powder or granule. The smaller the particle size of the powder, the more the diffusion of the fuel liquid is inhibited, accelerating local gelation. When the gelation proceeds locally and not uniformly as described above, the diffusibility of the fuel liquid decreases significantly, so that the effect of preventing the leakage of the fuel liquid from the inner container 21 is improved significantly.

When the fuel is a low-molecular-weight alcohol, as the material capable of solidifying the fuel liquid, preferred is protein. Examples of protein which are highly effective in solidifying the fuel liquid include gelatin, collagen, serum and albumen. The protein is preferably in the form of a gel or liquid for use because it can be easily denatured by alcohol and solidification proceeds rapidly.

The material capable of coagulating or gelling upon absorption of the fuel liquid often has a lower absorption rate than materials capable of only retaining the fuel liquid upon absorption of the fuel liquid. Accordingly, the combined use of the material capable of coagulating or gelling upon absorption of the fuel liquid with a fibrous material, sponge, dried gel, etc, is also effective. A material prepared by fibrillating a material used as a gelling agent may also be preferably used.

As the powdery or granular substance 23b capable of changing color upon contact with the fuel liquid, a dried gel, or a ceramic powder such as alumina, silica alumina or zeolite carrying a humidity indicator is preferably used. As the humidity indicator, silica gels and silica alumina gels impregnated with cobalt chloride, ferric ammonium alum, etc, are commercially available and readily obtainable. When such dried gel gets wet with water, the humidity indicator is dissolved in the water, is ionized, and changes color. Besides water, low-molecular-weight alcohol can dissolve the humidity indicator, and color change can be observed. A dried gel impregnated with an organic indicator, which is also readily obtainable, can be used as a sensor when the fuel liquid does not contain water or a low-molecular-weight alcohol. When a dried gel such as silica gel or silica alumina gel is used, the dried gel also functions as absorbent material.

By uniformly dispersing a mixture of the absorbent material 23a and the substance 23b capable of changing color upon contact with the fuel liquid in the space between the inner container 21 and the outer container 22 as shown in FIG. 2, the user can immediately recognize an abnormal condition in the event of leakage of the fuel liquid due to trouble such as breakage of the inner container 21.

### Third Embodiment

FIG. 3 is a schematic vertical cross sectional view of a fuel cell pack 30 of the present invention.
In the fuel cell pack 30, a fuel cell 301 and a fuel container 302 disposed adjacent to one surface of the fuel cell 301 are housed in a double wall exterior casing. The exterior casing comprises a rectangular inner casing 31 for housing the fuel cell 301 and the fuel container 302 and a rectangular outer casing 32 for housing the inner casing 31.

The constituent material of the outer casing 32 is not specifically limited, but those listed for the outer container 12 of the fuel container 10 according to the first embodiment can be used, for example. In the case of disposing a substance capable of changing color upon contact with fuel liquid as a sensor between the inner casing 31 and the outer casing 32, the entire outer casing 32 or part thereof should be made of a transparent or translucent material so that the color change of the sensor can be observed from the outside.

As for the constituent material of the inner casing 31, the inner casing 31 is preferably made of a material permeable to the fuel liquid. It is preferred to convey leaked fuel liquid outside the inner casing 31 since the fuel cell 301 and auxiliary equipment are housed inside the inner casing 31. Examples of the material permeable to the fuel liquid include a perforated material and a mesh material, but it is not limited thereto.

The fuel cell 301 is a stack comprising a pair of anode and cathode and separators for sandwiching the pair of anode and cathode. The anode-side surface of the fuel cell 301 faces the opening of the rectangular fuel tank 302. A fuel liquid (not shown) is supplied directly from the opening of the fuel tank 302 to the fuel cell 301. The cathode-side surface of the fuel cell 301 is attached to an inner wall of the inner casing 31 having a plurality of air vent apertures 35 for supplying air to the cathode of the fuel cell 301. The outer casing 32 also has a plurality of air vent apertures 36 formed therein, and the outside of the fuel cell pack 30 is communicated with the cathode of the fuel cell 301 through the air vent apertures.
In FIG. 3, only air vent apertures are formed in the inner casing 31 and the outer casing 32. However, when an absorbent material 33 is a substance having low air permeability, the air vent apertures 35 and 36 are preferably connected with pipes, etc.

FIG. 3 schematically shows an example of the fuel cell 301 and the fuel container 302, but the embodiments and arrangement of the fuel cell and fuel container are not limited thereto. Moreover, although FIG. 3 shows a fuel transfer structure in which a fuel liquid is supplied directly to the anode of the fuel cell, fuel transfer structure is not limited thereto, and any transfer structure proposed for conventional fuel cell packs is applicable to the fuel cell pack of the present invention without particular limitation. For example, if necessary, various auxiliary equipment may be disposed inside the fuel cell pack such as a pump for feeding the fuel liquid from the fuel container 302 to the fuel cell 301, a valve for adjusting the amount of fuel liquid supplied or stopping the supply thereof and a fan for supplying air.

The space between the inner casing 31 and the outer casing 32 is filled with the absorbent material 33 capable of retaining the fuel liquid. To the inner walls of the outer casing 32 are attached sensors 34 for detecting the presence of the fuel liquid between the inner casing 31 and the outer casing 32. The absorbent material 33 and the sensor 34 of the fuel cell pack 30 has the same structure as the absorbent material 13 and the sensors 14 of the first embodiment, but other absorbent materials and sensors can be used. For example, the mixture of the substance capable of changing color upon contact with the fuel liquid and the material capable of coagulating or gelling upon absorption of the fuel liquid described in the second embodiment may be filled into the space between the inner casing 31 and the outer casing 32. Alternatively, the material capable of solidifying or gelling upon absorption of the fuel liquid can be combined with a material such as a fibrous material, sponge or dried gel for use.

If the fuel liquid leaks from the fuel cell 301, the fuel container 302, or the pipe connecting the fuel cell 301 and the fuel container 302, the fuel liquid does not leak to the outside unless the inner casing 31 is damaged. Even if the inner casing 31 is damaged, the absorbent material 33 capable of retaining the fuel liquid disposed between the inner casing 31 and the outer casing 32 absorbs the fuel liquid. Accordingly, the leakage of the fuel liquid to the outside can be prevented. In the case where the inner casing is made of material permeable to the fuel liquid, it is possible to prevent the fuel liquid from staying or accumulating inside the inner casing 31, preventing malfunction of the fuel cell 301 and the auxiliary equipment. Also, the sensors 34 change color upon contact with the fuel liquid, so that the user of the fuel cell pack can detect abnormal conditions.

### Fourth Embodiment

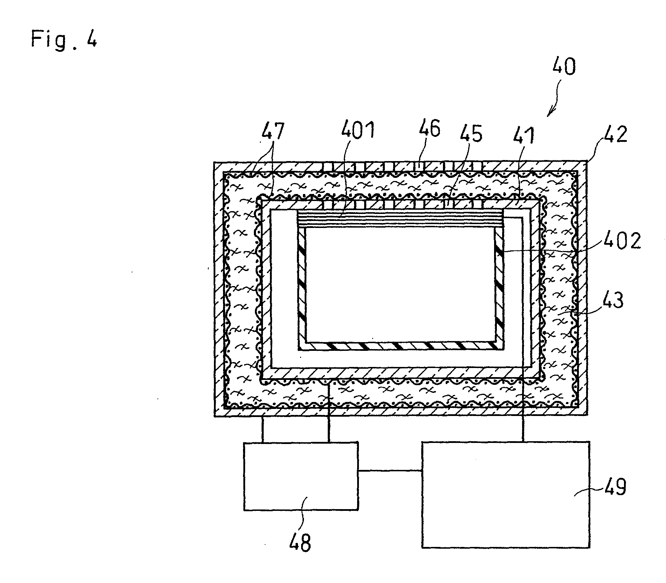

FIG. 4 is a schematic vertical cross sectional view of a fuel cell pack 40 of the present invention.
The fuel cell pack 40 has the same structure as the fuel cell pack 30 according to the third embodiment, except for the sensor for detecting the presence of the fuel liquid between the inner casing 41 and the outer casing 42. In other words, in the fuel cell pack 40 also, a fuel cell 401 and a fuel container 402 disposed adjacent to one surface of the fuel cell 401 are housed in a double wall exterior casing. The exterior casing comprises a rectangular inner casing 41 for housing the fuel cell 401 and the fuel container 402, and a rectangular outer casing 42 for housing the inner casing 41. The inner casing 41 has a plurality of air vent apertures 45 for supplying air to the cathode of the fuel cell 401 formed therein. Likewise, the outer casing 42 has a plurality of air vent apertures 46 for supplying air to the cathode of the fuel cell 401 formed therein.

A pair of electrodes 47 for measuring a change in electric conductivity between the inner casing 41 and the outer casing 42 are placed as a sensor. A measuring unit 48 for electric conductivity that is communicated with the pair of electrodes 47 constantly monitors the electric conductivity between the electrodes. When the fuel liquid leaks into the space between the inner and outer casings and enters between the electrodes, the electric conductivity between the electrodes changes significantly. Changes in electric conductivity can be detected by any parameter. For example, with the use of an alternating current ohmmeter as the measuring unit 48 for electric conductivity, a change in impedance between the electrodes is measured for the detection.

Information about changes in electric conductivity can be output by any method. For example, the information is sent to an electronic device 49 connected to the fuel cell 401 serving as its power source, and is output to a specified display of the electronic device 49. This easily informs the user of abnormal conditions.

The measuring unit 48 for electric conductivity can be mounted inside the fuel cell pack 40 or the electronic device 49. A means for outputting information about changes in electric conductivity such as a display can be placed anywhere, but preferably placed on the exterior casing of the fuel cell pack 40 or the electronic device 49. The information about abnormal conditions is preferably output when an electric conductivity higher than a specified value is detected.

It is desired that the pair of electrodes 47 respond to slight fuel leakage with high sensitivity. The electrode areas are made as large as possible. For example, a wire mesh, expanded metal, foamed metal, etc, is attached over the outer surface of the inner casing 41 and the inner surface of the outer casing 42 as shown in FIG. 4. Thereby, electrodes having a large electrode area can be produced at low cost. Alternatively, comb-shaped electrodes may be used. This is prepared by forming a plurality of strip-shaped electrodes with a spacing of several µm using photolithography and connecting them in the form of a comb. The material of the electrodes is preferably resistant to a corrosive fuel such as methanol. For example, the electrodes are produced using a metal such as titanium, gold or platinum, or electrodes plated with titanium, gold or platinum, etc, are preferably used.

When using a sensor for detecting electric conductivity, the fuel liquid preferably has a certain level of electric conductivity. As such, if the fuel liquid has insufficient electric conductivity, it is preferred to dissolve a solute in the fuel liquid, or to previously incorporate a solute soluble in the fuel liquid into the absorbent material 43. When leaked fuel liquid is absorbed by the absorbent material 43, the solute incorporated into the absorbent material 43 dissolves into the fuel liquid, producing a liquid having high electric conductivity. As a result, an increase in electric conductivity is detected by the sensor. The method of increasing the electric conductivity of leaked fuel liquid by incorporating a solute into the absorbent material 43 is also effective when the fuel liquid is an aqueous solution having relatively high electric conductivity. A preferred example of the solute is sodium chloride which inflicts no harm on human body and the environment.
The present invention will be described in detail below with reference to examples, but it should be understood that the present invention is not limited thereto.

### Example 1

A fuel container 10 for DMFC fuel cells as shown in FIG. 1 was produced, and a fuel liquid was stored in the fuel container. In a DMFC fuel cell, one mole of methanol reacts with one mole of water as shown by the reaction formula (1). As the fuel liquid, an aqueous solution containing 50 mol% methanol was used.

### (i) Inner container

A rectangular inner container 11 having a hollow therein was produced by extrusion of polytetrafluoroethylene (PTFE). The inner container 11 made of PTFE material had a size of 3 cm×3 cm×6 cm. Then, an aperture having a diameter of 1.5 cm was formed in one of the 3 cm×3 cm planes. The PTFE material had a thickness of 3 mm.

### (ii) Absorbent material

As an absorbent material 13, BEMCOT (registered trademark) M-3 manufactured by Asahi Kasei Corporation was used. This absorbent material is a fibrous product in the form of a sheet, and capable of retaining a methanol aqueous solution serving as the fuel liquid. This absorbent material in the form of a sheet was cut according to the shape of the inner container, which was then wound around the inner container to form 20 layers.

### (iii) Sensor capable of detecting presence of fuel liquid

Water detection seals capable of changing color upon contact with the fuel liquid were attached to the inner container covered with the absorbent material 13 as follows: two on each side faces and one on the bottom face. The water detection seals were prepared by cutting SCWD2 manufactured by Toko Industries, Ltd. into 1 cm square pieces.

### (iv) Outer container

An outer container 12 was produced by adjusting the size such that the outer container 12 was larger than the inner container 11 with a spacing of 7 mm therebetween. The outer container 12 was produced by preparing six pieces of 5 mm thick transparent polycarbonate plate having a specified size, disposing the plates such that they enclosed the inner container 11 covered with the absorbent material 13 and bonding them together by means of heat-sealing. Then, an aperture having the same size as that of the inner container 11 was formed in one of the plates at the corresponding position to the aperture of the inner container 11.

Into the apertures of the inner container 11 and the outer container 12 was fitted a cylindrical member 16. Its connecting portions were fixed to the inner container 11 and the outer container 12 with a commercially available silicon resin adhesive. The cylindrical member 16 was a PTFE column with a diameter of 1.5 cm having a hollow with a diameter of 9 mm formed therein by a drilling machine. Into the 9 mm diameter hollow of the cylindrical member 16 was pressed a commercially available cylindrical silicon rubber stopper for laboratory use as an elastic packing 16. Subsequently, a hollow needle 17 was inserted into the center of the packing 16. Thereby, a fuel container 10 was produced.

### (v) Evaluation

With the use of a syringe, 50 ml of fuel liquid (an aqueous solution containing 50 mol% methanol) was injected into the inner container 11 of the fuel container 10. Subsequently, a hole penetrating the inner container 11 through the outer container 12 was formed from the bottom face of the fuel container 10 using an awl with a diameter of 2 mm.

Within one second after the formation of the hole, the color of the water detection seal disposed on the bottom face of the fuel container changed. Within one minute, the color of all water detection seals changed. However, no methanol aqueous solution leaked from the outer container 12 was observed. Accordingly, it can be assumed that the methanol aqueous solution leaked from the inner container 11 was retained by the absorbent material 13. Thereafter, the packing 16 was removed, and the amount of methanol aqueous solution left in the inner container 11 was measured and found to be 28 ml.

### Example 2

A fuel container 20 for DMFC fuel cells as shown in FIG. 2 was produced, and a fuel liquid was stored in the fuel container. As the fuel liquid, an aqueous solution containing 50 mol% methanol was used.

### (i) Inner container

An inner container was produced in the same manner as in Example 1.

### (ii) Absorbent material and sensor for detecting presence of fuel liquid

As an absorbent material 23a, hydroxypropyl methyl cellulose (HPMC) was used. The HPMC used was METOLOSE 65SH-4000 manufactured by Shin-Etsu Chemical Co., Ltd. This HPMC is in the form of a powder, so that it rapidly solidifies or gels the methanol aqueous solution upon absorption of the methanol aqueous solution.

As a sensor for detecting the presence of the fuel liquid, a granular substance capable of changing color upon absorption of the fuel liquid, namely, a silica gel carrying a humidity indicator (manufactured by Kanto Chemical Co., Ltd.) was used. This silica gel is blue in a dried state. Upon contact with water, however, it turns light-purple. The silica gel also functions as an absorbent material.
The above-mentioned HPMC and the silica gel were mixed together to prepare a mixed powder containing 20 wt% of the silica gel.

### (iii) Outer container

Similar to Example 1, an outer container 22 was produced by adjusting the size such that the outer container 22 was larger than the inner container 21 with a spacing of 7 mm therebetween. More specifically, the outer container 22 was produced by preparing six pieces of 5 mm thick transparent polycarbonate plate having a specified size, disposing the plates such that they surrounded the inner container 21 and bonding them together by means of heat-sealing. Note that the plate having an aperture formed at the corresponding position to that of the inner container 21 was bonded after 30 g of the mixed powder containing HPMC and the silica gel was uniformly filled into the space between the inner container 21 and the outer container 22.

Subsequently, similar to Example 1, a cylindrical member 26 was fitted into the apertures of the inner container 21 and the outer container 22. Its connecting portions were fixed to the inner container 21 and the outer container 22 with a commercially available silicon resin adhesive. Into the 9 mm diameter hollow of the cylindrical member 26 was pressed a silicon rubber stopper as an elastic packing 26. Subsequently, a hollow needle 27 was inserted into the center of the packing 26. Thereby, a fuel container 20 was produced.

### (iv) Evaluation

Into the inner container 21 of the fuel container 20 was injected 50 ml of fuel liquid (an aqueous solution containing 50 mol% methanol). Subsequently, a hole penetrating the inner container 21 through the outer container 22 was formed from the bottom face of the fuel container 20 using an awl with a diameter of 2 mm.

Within one second after the formation of the hole, the color of the silica gel distributed near the bottom face of the fuel container 20 began to change, but the color of the silica gel distributed on the side faces of the fuel container 20 did not change. Also, no methanol aqueous solution leaked from the outer container 22 was observed.

Five minutes later, the packing 26 was removed, and the amount of methanol aqueous solution left in the inner container 21 was measured and found to be 45 ml, which was larger than that of Example 1. The outer container 22 was then disassembled, and the condition of HPMC distributed near the bottom face of the fuel container 20 was observed. As a result, only the HPMC distributed around the damaged portion of the inner container 21 caused by the awl gelled. Accordingly, it can be assumed that the gelation of HPMC effectively prevented the methanol aqueous solution from flowing out from the inner container 21.

### Example 3

A fuel cell pack 30 comprising a DMFC fuel cell 301 and a fuel container 302 as shown in FIG. 3 was produced, and a fuel liquid was stored in the fuel container 302. As the fuel liquid, an aqueous solution containing 50 mol% methanol was used.

### (i) Fuel cell

The fuel cell 301 was produced in the following procedure.
Onto 50 parts by weight of conductive carbon particles having an average primary particle size of 30 nm was carried 50 parts by weight of platinum to prepare cathode catalyst particles. Likewise, onto 50 parts by weight of the same carbon particles as above was carried 50 parts by weight of platinum-ruthenium alloy at an atomic ratio of 1:1 to prepare anode catalyst particles.

Each catalyst particles were mixed with a hydrogen ion conductive polymer electrolyte. Thereby, an anode catalyst paste and a cathode catalyst paste were prepared. The weight ratio of the carbon particles of the catalyst particles and the hydrogen ion conductive polymer electrolyte contained in each catalyst paste was 1:1.

The anode catalyst paste was printed on one surface of a hydrogen ion conductive polymer electrolyte membrane (Nafion 117 manufactured by E.I. Du Pont de Nemours & Co. Inc., USA) to form an anode catalyst layer, and the cathode catalyst paste was printed on the other surface of the membrane to form a cathode catalyst layer. The polymer electrolyte membrane carrying the anode and cathode catalyst layers was sandwiched by a pair of carbon papers serving as gas diffusion layers. Then, a rubber gasket was disposed around the stack. The stack having the gasket was hot-pressed, forming a membrane electrode assembly (MEA).

The MEA was sandwiched by graphite plates having a plurality of through holes formed therein. This was called unit cell. The unit cell had an outer dimension of 3 cm×3 cm. The electrode area to which the catalyst layer was disposed had a size of 2 cm×2 cm. Ten such unit cells were placed in parallel, and the graphite plates were connected in parallel using a lead wire and a conductive adhesive. Thereby, a fuel cell was produced.

### (ii) Fuel container

The fuel container 302 was produced in the following procedure.
A rectangular fuel container 302 having a hollow therein and an opening on one side thereof was produced by cutting and processing a PTFE material having a thickness of 3 mm. The fuel container 302 had a size of 6 cm×15 cm×3 cm. To the opening side of the fuel container 302 was attached the anode-side surface of the fuel cell 301.

In order to prevent fuel leakage from the interface between the fuel cell 301 and the fuel container 302, the fuel cell 301 and the fuel container 302 were sandwiched by stainless steel plates (thickness of 5 mm) each having 10 through holes therearound, which was fastened by inserting bolts into the through holes with the use of spring washers and nuts. Note that an aperture having a diameter of 5 mm was formed in a wall vertical to the opening face of the fuel container 302, into which a silicon rubber packing was pressed. A hollow needle was inserted into the center of the packing so that the fuel liquid can be injected.

### (iii) Inner casing

The assembly of the fuel cell 301 and the fuel container 302 was housed in an inner casing 31 having a hollow therein produced by processing a polycarbonate plate material having a thickness of 2 mm. The inner casing 31 had a size of 7 cm×16 cm×4.5 cm. Through holes having a diameter of 1 mm were formed with a spacing of 1 cm in the entire polycarbonate plate material. Then, the cathode-side surface of the fuel cell 301 was attached to one of the walls of the inner casing 31, whereby the inner casing 31 and the fuel cell 301 were fixed. The through holes formed in the wall of the inner casing which was in direct contact with the cathode-side surface of the fuel cell 301 functioned as air vent apertures 35.

### (iv) Absorbent material

As an absorbent material 33, similar to Example 1, BEMCOT (registered trademark) M-3 manufactured by Asahi Kasei Corporation was used. This absorbent material in the form of a sheet was cut according to the shape of the inner casing, which was then wound around the inner casing to form 20 layers.

### (v) Sensor for detecting presence of fuel liquid

Water detection seals capable of changing color upon contact with the fuel liquid were attached to the inner casing covered with the absorbent material 33 as follows: one on each side faces and two on the top and bottom faces. The water detection seals were prepared by cutting SCWD2 manufactured by Toko Industries, Ltd. into 1 cm square pieces.

### (iv) Outer casing

An outer casing 32 was produced by adjusting the size such that the outer casing 32 was larger than the inner casing 31 with a spacing of 7 mm therebetween. The outer casing 32 was produced by preparing six pieces of 3 mm thick transparent polycarbonate plate having a specified size, disposing the plates such that they enclosed the inner casing 31 covered with the absorbent material 33 and bonding them together using a commercially available adhesive. As air vent apertures 36, a plurality of apertures having a diameter of 1 cm were formed on the wall of the outer casing that corresponds to the wall of the inner casing 31 attached to the cathode-side surface of the fuel cell 301.

### (vii) Evaluation

Into the fuel container 302 of the produced fuel cell pack 30 was injected 250 ml of fuel liquid (an aqueous solution containing 50 mol% methanol). Subsequently, a hole penetrating the fuel container 302 through the outer casing 32 was formed in the fuel cell pack 30 using an awl with a diameter of 2 mm.

Within one second after the formation of the hole, the color of the water detection seal located nearest to the fuel cell 301 changed. Within one minute, the color of all water detection seals changed. However, no methanol aqueous solution leaked from the outer casing 32 to the outside was observed. When the fuel cell pack 30 was disassembled, it was revealed that the space between the fuel container 302 and the inner casing 31 was almost completely filled with the methanol aqueous solution, and that the almost entire absorbent material 33 was wet with the methanol aqueous solution. The amount of methanol aqueous solution left in the fuel container 302 was measured and found to be 20 ml.

### Example 4

A fuel cell pack 40 comprising a DMFC fuel cell 401 and a fuel container 402 as shown in FIG. 4 was produced, and a fuel liquid was stored in the fuel container 402. As the fuel liquid, an aqueous solution containing 50 mol% methanol was used.

### (i) Fuel cell

A fuel cell 401 was produced in the same manner as in Example 3.

### (ii) Fuel container

A fuel container 402 was produced in the same manner as in Example 3. Then, the fuel container 402 was combined with the fuel cell 401.

### (iii) Inner casing

An inner casing 41 was produced in the same manner as in Example 3. To one of the walls of the inner casing 41 was attached the cathode-side surface of the fuel cell 401, whereby the inner casing 41 and the fuel cell 401 were fixed together. Through holes formed in the wall of the inner casing which was in direct contact with the cathode-side surface of the fuel cell 401 functioned as air vent apertures 45.
To the entire outer side surface of the inner casing 41 was attached a stainless steel net plated with gold having a thickness of 0.2 mm.

### (iv) Absorbent material

As an absorbent material 43, similar to Example 1, BEMCOT (registered trademark) M-3 manufactured by Asahi Kasei Corporation was used. This absorbent material in the form of a sheet was cut according to the shape of the inner casing, which was then wound around the inner casing to form 20 layers.

### (v) Outer casing

The entire inner casing 41 covered with the absorbent material 43 was further covered with a stainless steel net plated with gold having a thickness of 0.2 mm. Then, the inner casing 41 covered with the stainless steel net and the absorbent material 43 was housed in an outer casing 42 which was produced in the same manner as in Example 3.

### (vi) Sensor for detecting presence of fuel liquid

Lead wires were welded to the stainless steel net covering the outer side surface of the inner casing 41 and the stainless steel net covering the entire inner casing 41 covered with the absorbent material 43, respectively, using a resistance welding machine. The lead wires were connected to an alternating current ohmmeter capable of measuring an alternating current resistance of 1 kHz. In other words, the two stainless steel nets functioned as a pair of electrodes, which enabled measurement of changes in electric conductivity between the electrodes.

The alternating current ohmmeter used was MODEL3566 manufactured by Tsuruga Electric Corporation. The measured value (output data) obtained from the alternating current ohmmeter was read into a notebook computer which had been configured to display a message informing the user of abnormal condition on the display thereof when the electric conductivity between the electrodes determined based on the output data from the alternating current ohmmeter exceeded 0.01 µS/cm. Note that an electric conductivity of 0.01 µS/cm equals approximately 1/10 of that of pure water.

### (vii) Evaluation

Into the fuel container 402 of the produced fuel cell pack 40 was injected 250 ml of fuel liquid (an aqueous solution containing 50 mol% methanol). Subsequently, a hole penetrating the fuel container 402 through the outer casing 42 was formed in the fuel cell pack 40 using an awl with a diameter of 2 mm.

About 30 seconds after the formation of the hole, the display of the notebook computer showed a message informing of abnormal condition. However, no methanol aqueous solution leaked from the outer casing 42 to the outside was observed. When the fuel cell pack 40 was disassembled, it was revealed that the space between the fuel container 402 and the inner casing 41 was almost completely filled with the methanol aqueous solution, and that the almost entire absorbent material 43 was wet with the methanol aqueous solution. The amount of methanol aqueous solution left in the fuel container 402 was measured and found to be about 20 ml.

### Example 5

### (i) Fuel cell pack

A fuel cell pack was produced in the same manner as in Example 4 except that hydroxypropyl methyl cellulose (HPMC) (METOLOSE 65SH-4000 manufactured by Shin-Etsu Chemical Co., Ltd.) was used as the absorbent material instead of BEMCOT (registered trademark) M-3 manufactured by Asahi Kasei Corporation. Further, instead of covering the entire inner casing covered with BEMCOT M-3 with the stainless steel net, the stainless steel net was attached to the entire inner side surface of the outer casing. The HPMC was uniformly filled into the space between the inner and outer casings.

### (vii) Evaluation

Into the fuel container of the produced fuel cell pack was injected 250 ml of fuel liquid (an aqueous solution containing 50 mol% methanol). Subsequently, a hole penetrating the fuel container through the outer casing was formed in the fuel cell pack using an awl with a diameter of 2 mm.

About 10 seconds after the formation of the hole, the display of the notebook computer showed a message informing of abnormal condition. However, no methanol aqueous solution leaked from the outer casing to the outside was observed. When the fuel cell pack was disassembled, it was revealed that the space between the fuel container and the inner casing was almost completely filled with the methanol aqueous solution, but only the portion of the absorbent material near the inner casing was gelled. The amount of methanol aqueous solution left in the fuel container was measured and found to be about 100 ml.

### Industrial Applicability

The present invention is applicable to any fuel cell that employs any type of fuel in liquid state such as methanol and dimethyl ether. The present invention is useful as a fuel cell pack serving as a power source for portable compact electronic devices such as cell phones, personal digital assistants (PDAs), notebook computers and video cameras, as well as a fuel container for supplying fuel liquid to the fuel cell pack. The present invention is also suitable for use as a fuel cell pack serving as a power source for electric scooters, electric vehicles, hybrid vehicles, as well as a fuel container for supplying fuel liquid to the fuel cell pack.

## Claims

1. A fuel container for storing a fuel liquid for a fuel cell, said fuel container comprising:
a double wall structure comprising an inner container for storing a fuel liquid and an outer container for housing said inner container; and
an absorbent material between said inner container and said outer container, said absorbent material being capable of retaining said fuel liquid.

2. The fuel container in accordance with claim 1,
wherein said absorbent material contains a material capable of gelling or coagulating upon absorption of said fuel liquid.

3. The fuel container in accordance with claim 2,
wherein said fuel liquid is an aqueous solution containing a fuel, and
said absorbent material comprises at least one selected from the group consisting of agar, carageenan, xanthan gum, gellan gum, guar gum, polyvinyl alcohol, polyacrylic acid salt, water-soluble cellulose and polyalkylene oxide.

4. The fuel container in accordance with claim 2,
wherein said fuel liquid is a non-aqueous solution containing a fuel, or is composed simply of a fuel, and
said absorbent material comprises hydroxypropyl methyl cellulose or/and a protein.

5. The fuel container in accordance with claim 1, further comprising a sensor for detecting presence of said fuel liquid between said inner container and said outer container.

6. The fuel container in accordance with claim 5,
wherein said sensor comprises a substance capable of changing color when said substance is in contact with said fuel liquid.

7. The fuel container in accordance with claim 6,
wherein said sensor comprises a dried gel carrying a humidity indicator.

8. The fuel container in accordance with claim 1,
wherein said fuel container is detachable from a fuel cell pack comprising a fuel cell.

9. A fuel cell pack comprising a fuel cell and a fuel container for storing a fuel liquid for said fuel cell,
said fuel cell pack comprising:
a double wall exterior casing comprising an inner casing for housing said fuel cell and said fuel container and an outer casing for housing said inner casing; and
an absorbent material between said inner casing and said outer casing, said absorbent material being capable of retaining a fuel liquid.

10. The fuel cell pack in accordance with claim 9,
wherein said absorbent material comprises a material capable of gelling or coagulating upon absorption of said fuel liquid.

11. The fuel cell pack in accordance with claim 10,
wherein said fuel liquid is an aqueous solution containing a fuel, and
said absorbent material comprises at least one selected from the group consisting of agar, carageenan, xanthan gum, gellan gum, guar gum, polyvinyl alcohol, polyacrylic acid salt, water-soluble cellulose and polyalkylene oxide.

12. The fuel cell pack in accordance with claim 10,
wherein said fuel liquid is a non-aqueous solution containing a fuel, or is composed simply of a fuel, and
said absorbent material comprises hydroxypropyl methyl cellulose or/and a protein.

13. The fuel cell pack in accordance with claim 9, further comprising a sensor for detecting presence of said fuel liquid between said inner casing and said outer casing.

14. The fuel cell pack in accordance with claim 13,
wherein said sensor comprises a substance capable of changing color when said substance is in contact with said fuel liquid.

15. The fuel cell pack in accordance with claim 14,
wherein said sensor comprises a dried gel carrying a humidity indicator.

16. The fuel cell pack in accordance with claim 13,
wherein said sensor comprises a pair of electrodes and a measuring unit for measuring a change in electric conductivity between said electrodes.

17. The fuel cell pack in accordance with claim 9,
wherein said inner casing comprises a material permeable to said fuel liquid.
